# EUROPEAN PATENT SPECIFICATION

(11) **EP 1 955 185 B1**
(45) Date of publication and mention of the grant of the patent: **12.09.2018**
(21) Application number: 06837687.0
(22) Date of filing: 15.11.2006
(51) Int. Cl.: G06F 15/16, H04L 29/06, H04L 29/08

(54) **SYSTEM FOR IDENTIFYING THE PRESENCE OF PEER-TO-PEER NETWORK SOFTWARE APPLICATIONS**
SYSTEM ZUM IDENTIFIZIEREN DER ANWESENHEIT VON PEER-TO-PEER-NETZWERK-SOFTWAREANWENDUNGEN
SYSTÈME POUR IDENTIFIER LA PRÉSENCE D'APPLICATIONS LOGICIELLES D'UN RÉSEAU POSTE À POSTE

(30) Priority: 15.11.2005 US 736794 P
(43) Date of publication of application: 13.08.2008
(73) Proprietor: Kroll Information Assurance, LLC, New York, New York 10016 (US)
(72) Inventor: HOPKINS, Samuel, P., Freedom, PA 15042 (US)
(74) Representative: Röthinger, Rainer
(86) International application number: PCT/US2006/044366
(87) International publication number: WO 2007/059224

(56) References cited:
- WO-A1-92/03001
- WO-A2-2005/045624
- US-A1- 2003 055 892
- US-A1- 2004 162 871
- US-A1- 2005 071 485
- US-A1- 2005 198 535
- US-A1- 2005 251 486

## Description

### Cross-Reference to Related Patent Applications

The application claims priority to U.S. Provisional Appl. No. 60/736,794, filed November 15, 2005, entitled "System for Identifying the Presence of Peer-to-Peer Network Software Applications," and is a continuation in part of United States Patent Application Serial No. 11/103,818 filed April 12th, 2005 entitled System for Detecting Peer-to-Peer Network Software.

### Field of the Invention

The present invention provides a system for detecting whether or not a computer system is or could participate in a Peer-to-Peer network by searching for specific terms and detecting these terms, or the resulting files.

### Background of the Invention

Peer-to-Peer networks comprise multiple nodes, each node typically consisting both of file server and client which can send and receive data or "Communication messages" to or from a node to which such is connected and other nodes on the network. Common Peer-to-Peer networks and software applications are Gnutella, FastTrack, Edonkey, NeoNet, Kazaa, Limewire, Morpheus, Bear Share, Bit Torrent, Shareaza, Emule, and Freenet.

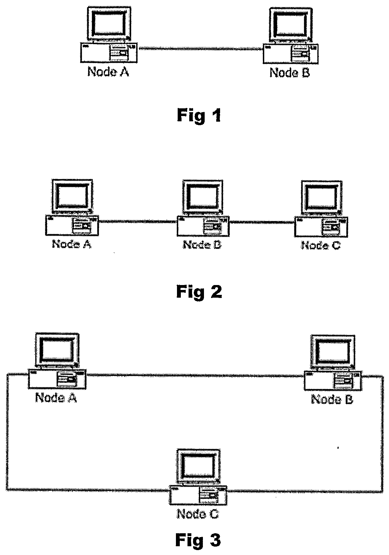

In a Peer-to-Peer network, each node is connected to other nodes over a communication medium such as the Internet either directly or through some type of proxy. For example, when a search request is issued such originating node sends a search request to all of the nodes to which it is connected. (See Figure 1) These nodes search their list of available files and if a match is found they send a response back with the location.

However, a Peer-to-Peer proxy network typically consists of node A which is connected to a node B and node B is connected to a node C. (See Figure 2) Node A is not connected to node C such that if node A issues a search request it will be forwarded to node B and Node B will search its available files and if a match is found it will send a response back
to node A. Node B will then forward node A's request to node C and Node C will search its available files and if a match is found it will send a response back to node B. Node B will then forward this response to node A. Figure 3 discloses a nonproxy loop network wherein each node is directly connected to another.

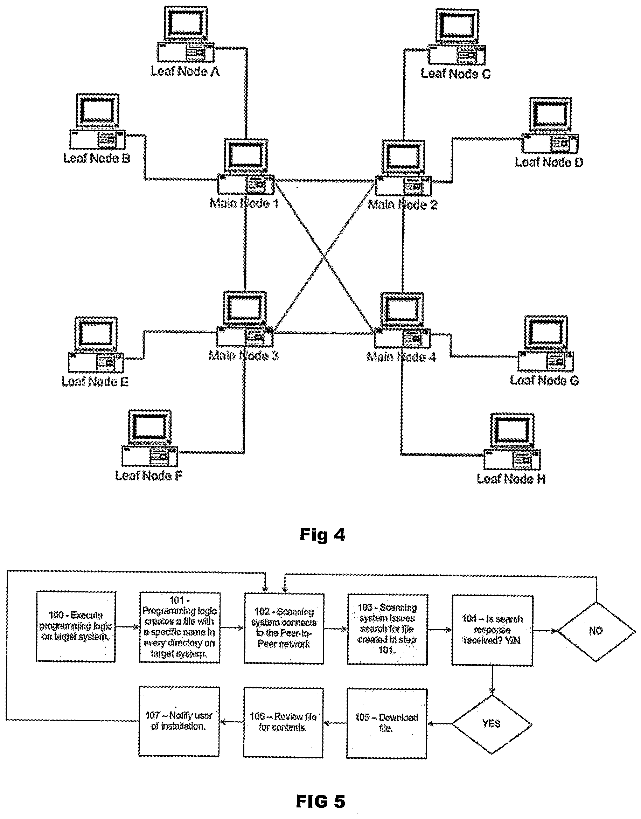

Some Peer-to-Peer networks utilize a leaf node/main node proxy topology (see Figure 4) where some nodes are classified as main nodes and the remaining nodes are classified as leaf nodes. Leaf nodes can only connect to main nodes. Only main nodes can connect to other main nodes. When a leaf node issues a search request it sends the request to the main node to which it is connected. The main node then forwards the request to any other leaf nodes that are connected to it and also to any main nodes to which it is connected. These main nodes forward the request to any leaf nodes that are connected to them.

A Peer-to-Peer network is used to share files among its users. They are commonly used to share and acquire copyrighted music, movies, ebooks, and software but can be used to share and acquire almost any other type of file. To access a Peer-to-Peer network, a user installs a Peer-to-Peer network software application that is capable of connecting to and utilizing the Peer-to-Peer network, much the same way that a user installs a web browser, such as Internet Explorer, to access the World Wide Web.

Organizations are placed at legal risk by Peer-to-Peer network usage by their employees if an employee installs a Peer-to-Peer network software application onto their work PC and utilizes the Peer-to-Peer network to acquire copyrighted works. Peer-to-Peer network usage also consumes a lot of network bandwidth because the commonly transferred files are large software and movie files. This places bandwidth burdens on an organization's computer network. Even though it is normally a violation of corporate policy to have a Peer-to-Peer network software application installed, employees still install these applications.

When installing a Peer-to-Peer network software application, the user must select a folder on their computer system in which to store any downloaded files. For the purposes of clarification, a "folder" is used to organize files on a computer system, also known as a "directory." Any files placed into this folder are also made available to other users. This folder is often called the "Shared Folder". For instance, if user #1 (on a first network node) places a file named "foofile" in their shared folder, user #2 (on a second network node) would then be able to access and download the file. Depending on the Peer-to-Peer network software application used, the user can also select additional folders to make available to other users of the network.

For whatever reason, users sometimes select as their shared folder a folder that contains sensitive information or information they do not otherwise wish to share or they may later begin to place sensitive information or information they do not otherwise wish to share into their shared folder by mistake. Usually this action is done by mistake and unknowingly by the user but sometimes it is done by a malicious person or virus. Sometimes the Peer-to-Peer network software application has a software bug that permits the sharing of files and folders that the user never intended to be shared. Unintended (or malicious) sharing of information may be detrimental the user, the organization they work for, or even to national security. It would therefore be advantageous to be able to locate computers with Peer-to-Peer network software applications installed so that such applications can be assessed or removed.

There are hundreds if not thousands of different Peer-to-Peer network software applications with each having its own set of attributes. Current detection methods concentrate on 1) identifying the presence of each of these different Peer-to-Peer network software applications on a computer system or 2) the placement of a hardware/software based inline filter between the computer system and Internet to detect Peer-to-Peer network communications by looking for their protocols, monitoring for downloads, or increased bandwidth usage.
As Peer-to-Peer network software applications are created or current ones change, detecting the presence of a specific Peer-to-Peer network software application on a computer system or monitoring for Peer-to-Peer network communication on the organization's network becomes increasing challenging.

The method of identifying the presence of Peer-to-Peer network software applications on a computer system entails creating a software "blueprint" of each Peer-to-Peer network software application and checking to see if this blueprint exists on a target computer system. Virus scanning software works in the same way, in that a blueprint of the virus is created and then checked against each file on a target computer system. Using a software blueprint to detect Peer-to-Peer network software applications is successful only if the Peer-to-Peer network software application is known and an accurate blueprint has been created. Each time a new Peer-to-Peer network software application is created a new blueprint must be created and there is an inherent lag in protection during the development of the software blueprint. Furthermore, when a Peer-to-Peer network software application is upgraded or changed because of new developments, a Peer-to-Peer network software application blueprint may no longer be valid. This leaves an organization exposed.

Inline filters detect Peer-to-Peer network usage by monitoring network communications on the organization's network and comparing the communications to known Peer-to-Peer network protocols. Using a protocol comparison method to detect Peer-to-Peer network software application only works if the Peer-to-Peer network software application's protocol is known. Each time a new Peer-to-Peer network software application is created the inline filter must be upgraded to look for the new protocol or data. Furthermore, when a Peer-to-Peer network software application is upgraded or changed because of new developments, the comparison filter that the inline filter uses may no longer be valid. Inline filters also do not work on Peer-to-Peer networks in which the communications between users is encrypted. This leaves an organization exposed.

US 2005/0071485 A1 (Ramagopal) describes a system that is concerned with blocking unwanted resources from the Internet.

US 2005/0251486 A1 (Nair) describes a system that prevents the transfer of illicit digital files based on the detection of a digital watermark that is on the digital file.

WO 2005/045624 A2 (P2P Engineering LLC) describes a system that searches for protected content (e.g., copyrighted content) on a network and then either degrades the content of a file or prevents the content from being transferred.

US 2005/0198535 A1 (Basche) describes a client user interface that provides users with copy protection services.

Finally, WO 1992/003001 A1 (Concord Communications Inc.) describes an access controller for peer-to-peer networks which monitors data packets being transmitted over a communication path, where the access controller can either destroys a packet being transmitted or transmits one or more other packets that appear to be legitimate but instead terminate or alter the communication path.

### Summary Of The Invention

According to the present disclosure, there are provided an apparatus, a computer-readable medium and a method according to the independent claims. Developments are set forth in the dependent claims.

One aspect is directed to a system and method for detecting peer-to-peer network software operating on a target computer. A target file is created, and placed in one or more folders on the target computer. A search is issued on a Peer-to-Peer network for the target file. Peer-to-peer software is detected to be operating on the target computer in accordance with results of the search.

The target file may be placed in a plurality of folders on the target computer, and optionally contains data that uniquely identifies the target computer. The data may be encrypted, and can include an IP address of the target computer, a name of the target computer, a name of a user of the target computer, and/or an email address of a user of the target computer. The data may be entered by a network administrator or operator responsible for monitoring the target computer. The method/system may be implemented at least in part using software that executes on the target computer, or alternatively using software that executes on a computer different from the target computer. A firewall, an intrusion detection system, a router, or an application, may be automatically notified upon detection of peer-to-peer software on the target computer.

There may be a system and method for detecting peer-to-peer network participation of a first node. Network data of the first node is monitored. A search is issued for a predetermined term on a peer-to-peer network while monitoring the network data. Peer-to-peer participation of the first node in the peer-to-peer network is detected if the monitoring identifies the predetermined term being transmitted to the first node.

An administrator responsible for monitoring the first node is notified if peer-to-peer participation is detected. Blocking of data access to the first node may be automatically implemented if peer-to-peer participation is detected. In addition, peer-to-peer software associated with the first node may be automatically or manually disabled if peer-to-peer participation is detected.

### Brief Description of the Drawings

Figure 1 is a simplified schematic of a two node Peer-to-Peer network;
Figure 2 is a simplified schematic of a Peer-to-Peer proxy network;
Figure 3 is a simplified schematic view of a Peer-to-Peer, nonproxy, loop network;
Figure 4 is a simplified schematic of a peer to peer leaf/main node network.
Figure 5 is a simplified flowchart representation of one of embodiment of the present invention where a file is placed onto a target system and is then searched for via the peer-to-peer network; and
Figure 6 is a simplified flowchart representation of another embodiment of the present invention where a monitoring agent is placed between a target system and a peer-to-peer network. A search is then initiated on the peer-to-peer network to see if the monitoring agent detects the search coming into the network.

### Description of Presently Preferred Embodiments

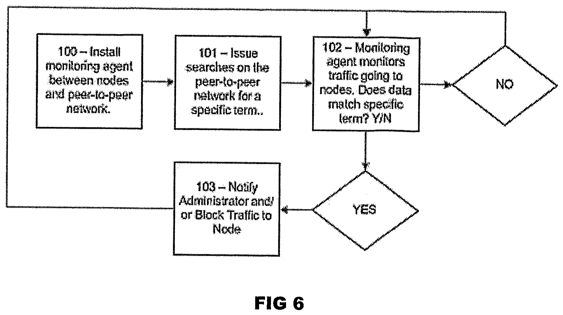

As part of operating, nodes on a peer-to-peer network receive searches from the network for items that are being searched for by other users. If a first node receives a search and has a matching item, the first node will respond back to the searcher node. Referring to Figure 6, in one embodiment of the present invention, administrators install a monitoring agent and configure it to detect certain terms heading inbound to a node or group of nodes that they wish to protect. The monitoring agent could be a device on its own, a piece of software, embedded in a router or firewall, or other network device which passes network data or has the potential to monitor network data such as a sniffer. The monitoring agent could have the data (being monitored) pass through it, or it could receive a copy of such data. The administrators then issues searches on the peer-to-peer network and see if these terms get sent to any protected nodes. If the term is detected by the monitoring agent as being sent to a node that is being protected, this would signal to the administrators that the node has peer-to-peer software. They would know this because the monitoring agent had detected the search inbound to a node so therefore the node must be part of the peer-to-peer network to receive the search. Upon detection that a node has peer-to-peer software, the monitoring agent is optionally configured to block all transmissions to the node until the administrators removed the software. The monitoring agent could also be configured to notify the administrators upon detection that a node has peer-to-peer software. The monitoring agent could be configured to do either of these functions (i.e., blocking/notification) automatically upon detection that a node has peer-to-peer software.

Referring to Figure 5, one embodiment of the present invention advantageously utilizes a software program to create a target file and places this target file in the folders of a target computer that is to be monitored for the purpose of detecting whether the target computer contains Peer-to-Peer network application software. The target file is preferably placed in as many folders as possible in the target computer because the "shared folder" on the target computer (to the extent one exists) is not known to the monitoring application. If the target computer has a Peer-to-Peer network software application installed, this target file will be available to be shared with other users of the Peer-to-Peer network, and an appropriate search of the Peer-to-Peer network for the target file will result in detection of the target file by a monitoring application. Once the target file or its data is detected on a Peer-to-Peer network, it can be assumed that the target computer is in some way participating in the Peer-to-Peer network and steps can be taken to remove the Peer-to-Peer network software application from the target computer. The advantages of this system compound when the monitoring application protects multiple target computers such as you would find on a corporate network. It can also be used to offer home users or consumers protection from inadvertent or malicious installation of a peer-to-peer client application.

In another embodiment, a software program is executed on the target computer. The software program creates a target file. The target file is placed into the folders of the target computer. For example, the target file is placed in as many folders as possible because the "shared folder" is not known. A search is initiated on a Peer-to-Peer network to check for the presence of the target file. If the target file is located (e.g., a node searching for the file is able to retrieve it), it can be assumed that the target is in some way participating in the Peer-to-Peer network and steps can be taken to remove the Peer-to-Peer network software application.

In another embodiment, a software program is executed on the target computer. The software program creates a target file. The data contained within this target file is information that can be used to identify the target computer. This is useful when there are more than one computer systems being targeted, and optionally one filename is used for ease of searching. The target file is placed into the folders of the target computer(s). For example, the target file is placed in as many folders as possible because the "shared folder" on each target computer is not known. Where there is more than one computer system being targeted, the data contained within this target file is optionally varied for each target computer. A search is initiated on a Peer-to-Peer network to check for the presence of the target file. If the target file is located (e.g., a node searching for the file is able to retrieve it), the file is then acquired and the data reviewed to identify the corresponding target computer.

In another embodiment, a software program is executed on the target computer. The software program creates a target file. The data contained within this target file is information that can be used to identify the target computer. This is useful when there are more than one computer system being targeted, and optionally one filename is used for ease of searching. The data that this target file includes is encrypted to protect the contents. The target file is placed into the folders of the target computer(s). For example, the target file is placed in as many folders as possible because the "shared folder" on each target computer is not known. Where there is more than one computer system being targeted, the data contained within this target file is optionally varied for each target computer. A search is initiated on a Peer-to-Peer network to check for the presence of the target file. If the target file is located (e.g., a node searching for the file is able to retrieve it), the file is then acquired. Once the file is acquired, the data contained within it is decrypted and reviewed to identify the corresponding target computer.

In another embodiment, a software program is executed on a computer system that has access to a target system's file systems. The software program creates a target file. The target file is placed into the folders of the target computer (i.e., the computer that is to be monitored for the purpose of detecting whether the target computer contains Peer-to-Peer network application software). For example, the target file is placed in as many folders as possible because the "shared folder" is not known. A search is initiated on a Peer-to-Peer network to check for the presence of the target file. If the target file is located (e.g., a node searching for the file is able to retrieve it), it can be assumed that the target computer is in some way participating in the Peer-to-Peer network and steps can be taken to remove the Peer-to-Peer network software application from the target computer.

In another embodiment, a target file is placed into the folders of the target computer. The target file is placed in as many folders as possible because the "shared folder" is not known. A search is initiated on a Peer-to-Peer network to check for the presence of the target file. If the target file is located (e.g., a node searching for the file is able to retrieve it), it can be assumed that the target is in some way participating in the Peer-to-Peer network and steps can be taken to remove the Peer-to-Peer network software application from the target computer.

In another embodiment, a software program is executed on a computer system that has access to one or more target systems' file systems. The software program creates a target file. The data contained within this target file is information that can be used to identify the target computer(s). This is useful when there are more than one computer systems being targeted, and optionally one filename is used for ease of searching. The target file is placed into the folders of the target computer(s). For example, the target file is placed in as many folders as possible because the "shared folder" on each target computer is not known. Where there is more than one computer system being targeted, the data contained within this target file is optionally varied for each target computer. A search is initiated on a Peer-to-Peer network to check for the presence of the target file. If the target file is located, the file is then acquired and the data reviewed to identify the corresponding target computer.

In another embodiment, a software program is executed on a computer system that has access to one or more target systems' file systems. The software program creates a target file. The data contained within this target file is information that can be used to identify the target computer(s). This is useful when there are more than one computer system being targeted, and optionally one filename is used for ease of searching. The data that this target file includes is encrypted to protect the contents. The target file is placed into the folders of the target computer(s). For example, the target file is placed in as many folders as possible because the "shared folder" on each target computer is not known. Where there is more than one computer system being targeted, the data contained within this target file is optionally varied for each target computer. A search is initiated on a Peer-to-Peer network to check for the presence of the target file. If the target file is located, the file is then acquired. Once the file is acquired, the data contained within it is decrypted and reviewed to identify the corresponding target computer.

In yet another embodiment, a target file is placed onto a target system and a search is initiated via the peer-to-peer network for the target file. If the file is detected notification occurs. For example, an administrator responsible for monitoring the target computer is sent an electronic communication informing the administrator that the target computer is operating a peer-to-peer network software application.

In yet another embodiment, a target file is placed onto a target system. A monitoring agent is placed between the target system and the peer-to-peer network. A search is initiated via the peer-to-peer network for the target file. If the file is detected by the monitoring agent, then notification occurs. For example, an administrator responsible for monitoring the target computer is sent an electronic communication informing the administrator that the target computer is operating a peer-to-peer network software application. Optionally the monitoring agent automatically disables access to the node that has peer-to-peer software (i.e., the target system).

In yet another embodiment, a monitoring agent is placed between the target system and the peer-to-peer network. A search is initiated for a specific term via the peer-to-peer network. The monitoring agent is configured to monitor data inbound to nodes it is configured to protect (e.g., the target system). If the monitoring agent detects the specific
term it will assume that the target system has peer-to-peer software, and automatically disable access to the target system.

In yet another embodiment, a monitoring agent is placed between the target computer and the peer-to-peer network. This monitoring agent could be a device on its own, embedded in a router or firewall, or other network device which passes network data. A software program is executed on the target computer. The software program creates a target file. The target file is placed into the folders of the target computer. For example, the target file is placed in as many folders as possible because the "shared folder" is not known. A search is initiated on a Peer-to-Peer network to check for the presence of the target file. If the monitoring agent detects the search string for the file the monitoring agent automatically blocks traffic to and from the target computer to prevent network access.

In yet another embodiment, a monitoring agent is placed between the target computer and the peer-to-peer network. This monitoring agent could be a device on its own, embedded in a router or firewall, or other network device which passes network data. A software program is executed on one or more target computers. The software program creates a target file. The data contained within this target file is information that can be used to identify the target computer. This is useful when there are more than one computer system being targeted, and optionally one filename is used for ease of searching. The data that this target file includes is encrypted to protect the contents. The target file is placed into the folders of the target computer(s). For example, the target file is placed in as many folders as possible because the "shared folder" is not known. Where there is more than one computer system being targeted, the data contained within this target file is optionally varied for each target computer. A search is initiated on a Peer-to-Peer network to check for the presence of the target file. If the target file is located, the file is then acquired. Once the file is acquired, the data contained within it is decrypted and reviewed to identify the corresponding target computer. The searching system then notifies the monitoring agent which automatically blocks traffic to and from the identified target computer(s) to prevent network access.

In yet another embodiment, a corporate network is protected by placing a target file in the folders of the computers located on the network, optionally changing the name of each file, or optionally encrypting the data contained within it. The file(s) are searched for on a Peer-to-Peer network, and if the file is detected it is optionally downloaded. Administrators or the user could then be notified.

In one embodiment, the invention is implemented in a computer system that contains a processor unit, main memory, and an interconnect bus. The processor unit may contain a single microprocessor, or may contain a plurality of microprocessors for configuring the computer as a multi-processor system. The main memory stores, in part, instructions and data for execution by the processor unit. If the ability of the inventive system is wholly or partially implemented in software, the main memory may be used to store the executable code when in operation. The main memory may include banks of dynamic random access memory as well as high speed memory.

The computer system may further include a mass storage device, peripheral devices, portable storage medium drives, input control device, a graphics subsystem, and an output display. The computer system may be connected through one or more data transport means. For example, the processor unit and the main memory may be connected via a local microprocessor bus, and the mass storage device, peripheral devices, portable storage medium drives, graphics subsystem may be connected via one or more input/output (I/O) busses. The mass storage device, which may be implemented with a magnetic disk drive or an optical disk drive, is nonvolatile storage device for storing data and instructions for use by the processor unit. In a software embodiment, the mass storage device stores the software for loading to the main memory.

The input control device(s) provide a portion of the user interface for a user of the computer system. The input control devices may include an alpha numeric keypad for inputting alphanumeric and other key information, a cursor control device, such as a mouse, a trackball, a stylus, or cursor direction keys. In order to display textual and graphical information, the computer system contains the graphics subsystem and the output display. The output display may include a cathode ray tube display or a liquid crystal display. The graphics subsystem receives textual and graphical information and processes the information for output to the output display.

The components contained in the computer system are those typically found in general purpose computer systems, and in fact, these components are intended to represent a broad category of such computer components that are well known in the art.

The system may be implemented in either hardware or software. For some software embodiments, the software includes a plurality of computer executable instructions for implementation on a general purpose computer system. Prior to loading into a general purpose computer system, the system may reside as encoded information on a computer readable medium, such as a magnetic floppy disc, magnetic tape compact disc read only memory (CD-ROM). In one hardware embodiment, the system may comprise a dedicated processor including processor instructions for performing the functions described herein. Circuits may also be developed to perform the functions described herein.

### Examples

The following Examples illustrate various embodiments of systems according to the present Invention.

**Example 1:** This example illustrates a system for detecting Peer-to-Peer software applications by creating a specific target file, placing this target file in the folders of a target computer, and searching for this target file on a Peer-to-Peer network.

In this example, a user has installed a Peer-to-Peer software application onto computer system #1. A network administrator wishes to identify if this computer system has a Peer-to-Peer software application installed. The network administrator executes the detection software. The detection software creates a file named, "123456.txt" and places this file in every folder of computer system #1. The network administrator then issues a search on a Peer-to-Peer network for "123456.txt." The network administrator locates a file named, "123456.txt." The network administrator now knows that computer system #1 has a Peer-to-Peer network software application installed.

**Example 2:** This example illustrates a system for a detecting Peer-to-Peer software application by creating a specific target file with specific data, placing this target file in the folders of a target computer, and searching for this target file on a Peer-to-Peer network.

In this example, a user has installed a Peer-to-Peer software application onto computer system #1 which has an IP address of 192.168.0.1. A network administrator wishes to identify if this computer system has a Peer-to-Peer software application installed thereon. The network administrator executes the detection software. The detection software creates a file named, "123456.txt." with the contents of this file being the IP address of computer system #1. The detection software places this file in every folder of computer system #1. The network administrator then issues a search on a Peer-to-Peer network for "123456.txt." The network administrator locates a file named, "123456.txt." The network administrator acquires the file and reviews the data. The IP address within the file is "192.168.0.1." The network administrator now knows that computer system #1 has a Peer-to-Peer network software application installed thereon.

**Example 3:** This example illustrates a system for detecting a Peer-to-Peer software application on multiple computer systems by creating a specific target file with specific data, placing this target file in the folders of a target computer, and searching for this target file on a Peer-to-Peer network.

In this example there are five computer systems on a network:
Computer system #1 with an IP address of 192.168.0.1
Computer system #2 with an IP address of 192.168.0.2
Computer system #3 with an IP address of 192.168.0.3
Computer system #4 with an IP address of 192.168.0.4
Computer system #5 with an IP address of 192.168.0.5
The network administrator wishes to identify if any of these computer systems have a Peer-to-Peer network software application installed thereon. One or more users have installed a Peer-to-Peer software application onto computer system #1 and computer system #3. The network administrator executes the detection software on each computer system. The detection software on each computer system creates a file named, "123456.txt." with the contents of this file being the IP address of the corresponding computer system. The detection software places this file in every folder of the corresponding computer system. The network administrator then issues a search on a Peer-to-Peer network for "123456.txt." The network administrator locates two files named, "123456.txt." The network administrator acquires these file and reviews the data. The IP address within file #1 is "192.168.0.1" and the IP address within file #2 is "192.168.0.3." The network administrator now knows that computer system #1 and computer system #3 have a Peer-to-Peer network software application installed thereon.

**Example 4:** This example illustrates a system for detecting a Peer-to-Peer software application on the computers of a network which share the same IP addresses by creating a specific target file with specific data, placing this file in the folders of a target computer, and searching for this file on a Peer-to-Peer network.

In this example there is a corporate network that includes two remote offices. Each remote office network has two computer systems. Each computer system has a unique computer name. Each remote office utilizes an IP address scheme that is the same as the other. The resulting IP addresses are:
Remote Office #1, Computer System #1: COMPA, 192.168.0.1
Remote Office #1, Computer System #2: COMPB, 192.168.0.2

Remote Office #2, Computer System #1: COMPC, 192.168.0.1
Remote Office #2, Computer System #2: COMPD, 192.168.0.2
One or more users have installed a Peer-to-Peer software application on computer system #1 in remote office #1 and on computer system #2 in remote office #2. A network administrator wishes to identify if any computer system on either remote office network has a Peer-to-Peer software application installed thereon. The network administrator executes the detection software on all computer systems on both remote office networks. The detection software on each computer system creates a file named, "123456.txt." with the contents of this file being the IP address and name of the corresponding computer system. The detection software places this file in every folder of the corresponding computer system. The network administrator then issues a search on a Peer-to-Peer network for "123456.txt." The network administrator locates two files named, "123456.txt." The network administrator acquires these file and reviews the data. The IP address within file #1 is "192.168.0.1" and the IP address within file #2 is "192.168.0.2." The name in file #1 is "COMPA" and the name in file #2 is "COMPD." The network administrator now knows that computer system #1 in remote office #1 and computer system #2 in remote office #2 have a Peer-to-Peer network software application installed thereon.

**Example 5:** This example illustrates a secure system for detecting a Peer-to-Peer software application on multiple computer systems by creating a specific target file with specific data, encrypting this data, placing this file in the folders of a target computer, and searching for this file on a Peer-to-Peer network.

In this example, there are five computer systems on a network:
Computer system #1 with an IP address of 192.168.0.1
Computer system #2 with an IP address of 192.168.0.2
Computer system #3 with an IP address of 192.168.0.3
Computer system #4 with an IP address of 192.168.0.4
Computer system #5 with an IP address of 192.168.0.5
The network administrator wishes to identify in a secure manner if any of these computer systems have a Peer-to-Peer network software application installed thereon. One or more users have installed a Peer-to-Peer software application onto computer system #1 and computer system #3. The network administrator executes the detection software on each computer system. The detection software on each computer system creates a file named, "123456.txt." with the contents of this file being the IP address of the corresponding computer system. The detection software encrypts the contents of the file. The detection software places this file in every folder of the corresponding computer system. The network administrator then issues a search on a Peer-to-Peer network for "123456.txt." The network administrator locates two files named, "123456.txt." The network administrator acquires these files, decrypts the data, and reviews the data. The IP address within file #1 is "192.168.0.1" and the IP address within file #2 is "192.168.0.3." The network administrator now knows that computer system #1 and computer system #3 have a Peer-to-Peer network software application installed thereon.

Finally, it will be appreciated by those skilled in the art that changes could be made to the embodiments described above without departing from the broad inventive concept thereof. It is understood, therefore, that this invention is not limited to the particular embodiments disclosed, but is intended to cover modifications within the scope of the appended claims.

## Claims

1. A method for detecting whether peer-to-peer, P2P, file sharing software is operating on a first node, comprising:
a. creating a target file that contains identifying data, wherein the identifying data uniquely identifies the first node;
b. placing the target file in one or more folders on the first node prior to an administrator knowing whether the first node is participating in P2P file sharing;
c. issuing a search for the target file on a P2P file sharing network; and
d. if the target file is located on the P2P file sharing network as a result of the search, determining that the P2P file sharing software is operating on the first node and preventing the first node from participating in the P2P file sharing network by blocking data access to the first node.

2. The method of claim 1, wherein the first node resides on a corporate computer network.

3. The method of claim 1, wherein the first node resides on a home computer network.

4. The method of claim 1, wherein the target file is placed in a plurality of folders on the first node.

5. The method of claim 1, wherein the identifying data is one or more of:
a. encrypted;
b. includes an IP address of the first node;
c. contains a name of the first node;
d. contains a name of a user of the first node;
e. contains an email address of a user of the first node; and
f. contains information entered by the network administrator or operator responsible for monitoring the first node.

6. The method of claim 1, wherein the method is implemented at least in part using software that executes on the first node.

7. The method of claim 1, wherein the method is implemented at least in part using software that executes on a computer different from the first node.

8. A computer-readable medium comprising code portions which, when executed on a processor, configure the processor to perform all steps of a method according to any one of the preceding method claims.

9. A system for detecting whether peer-to-peer, P2P, file sharing software is operating on a first node, comprising:
a storage medium configured to store instructions;
a user input device configured to receive user input; and
a processor unit configured to process the user input and to use the instructions to:
- create a target file that contains identifying data, wherein the identifying data uniquely identifies the first node;
- place the target file in one or more folders on the first node prior to an administrator knowing whether or not the first node is participating in P2P file sharing;
- issue a search for the target file on a P2P file sharing network; and
- if the target file is located as a result of the search, determining that the P2P file sharing software is operating on the first node and prevent the first node from participating in the P2P file sharing network by blocking data access to the first node.

10. The system of claim 9, wherein the processor unit is configured to:
- process the user input and
- use the instructions to place the target file in a plurality of folders on the first node.

11. The system of claim 9, wherein the identifying data is one or more of:
a. encrypted;
b. includes an IP address of the first node;
c. contains a name of the first node;
d. contains a name of a user of the first node;
e. contains an email address of a user of the first node; and
f. contains information entered by the network administrator or operator responsible for monitoring the first node.

12. The system of claim 9, wherein the system is implemented using software configured to execute at least in part on the first node.

13. The system of claim 9, wherein the system is implemented using software configured to execute at least in part on a computer different from the first node.

14. The system of claim 9, wherein the processor unit is configured to automatically notify at least one of a firewall, an intrusion detection system, a router, or an application, upon detection of P2P software.

## Patentansprüche

1. Verfahren zum Erfassen, ob eine Peer-zu-Peer-, P2P, -Software zur gemeinsamen Dateienverwendung auf einem ersten Knoten läuft, umfassend:
a. Erstellen einer Zieldatei, die Identifikationsdaten umfasst, wobei die Identifikationsdaten den ersten Knoten eindeutig identifizieren;
b. Platzieren der Zieldatei in einem oder mehreren Ordnern auf dem ersten Knoten, bevor ein Administrator weiß, ob der erste Knoten an der gemeinsamen P2P-Dateienverwendung teilnimmt;
c. Veranlassen einer Suche nach der Zieldatei auf einem Netzwerk mit gemeinsamer P2P-Dateienverwendung; und
d. falls die Zieldatei auf dem Netzwerk mit gemeinsamer P2P-Dateienverwendung als ein Ergebnis der Suche befindlich ist, Bestimmen, dass die Software für die gemeinsame P2P-Dateienverwendung auf dem ersten Knoten läuft und Verhindern, dass der erste Knoten an dem Netzwerk mit gemeinsamer P2P-Dateienverwendung teilnimmt, durch Blockieren von Datenzugang zu dem ersten Knoten.

2. Verfahren gemäß Anspruch 1, wobei sich der erste Knoten in einem Unternehmenscomputernetzwerk befindet.

3. Verfahren gemäß Anspruch 1, wobei sich der erste Knoten in einem Heimcomputernetzwerk befindet.

4. Verfahren gemäß Anspruch 1, wobei die Zieldatei in einer Vielzahl von Ordnern auf dem ersten Knoten platziert wird.

5. Verfahren gemäß Anspruch 1, wobei die Identifikationsdaten eines oder mehreres sind aus:
a. verschlüsselt;
b. eine IP-Adresse des ersten Knotens umfassend;
c. einen Namen des ersten Knotens umfassend;
d. einen Namen eines Benutzers des ersten Knotens umfassend;
e. eine E-Mail-Adresse eines Benutzers des ersten Knotens umfassend; und
f. Informationen umfassend, die durch den Netzwerkadministrator oder -operator eingegeben sind, der zum Überwachen des ersten Knotens verantwortlich ist.

6. Verfahren gemäß Anspruch 1, wobei das Verfahren zumindest teilweise unter Verwendung von Software implementiert wird, die auf dem ersten Knoten ausgeführt wird.

7. Verfahren gemäß Anspruch 1, wobei das Verfahren zumindest teilweise unter Verwendung von Software implementiert wird, die auf einem Computer ausgeführt wird, der von dem ersten Knoten verschieden ist.

8. Computerlesbares Medium, das Codeabschnitte umfasst, die bei Ausführung auf einem Prozessor den Prozessor konfigurieren, um alle Schritte eines Verfahrens gemäß zumindest einem der vorangegangenen Verfahrensansprüche durchzuführen.

9. System zum Erfassen, ob eine Peer-zu-Peer-, P2P, -Software zur gemeinsamen Dateienverwendung auf einem ersten Knoten läuft, umfassend:
ein Speichermedium, das konfiguriert ist, um Anweisungen zu speichern;
eine Benutzereingabevorrichtung, die konfiguriert ist, um eine Benutzereingabe zu empfangen; und
eine Prozessoreinheit, die konfiguriert ist, um die Benutzereingabe zu verarbeiten und die Anweisungen zu verwenden, um:
- eine Zieldatei zu erstellen, die Identifikationsdaten umfasst, wobei die Identifikationsdaten den ersten Knoten eindeutig identifizieren;
- die Zieldatei in einem oder mehreren Ordnern auf dem ersten Knoten zu platzieren, bevor ein Administrator weiß, ob der erste Knoten an der gemeinsamen P2P-Dateienverwendung teilnimmt;
- eine Suche nach der Zieldatei in einem Netzwerk mit gemeinsamer P2P-Dateienverwendung zu veranlassen; und
- falls die Zieldatei als ein Ergebnis der Suche lokalisiert wird, zu bestimmen, dass die Software zur gemeinsamen P2P-Dateienverwendung auf dem ersten Knoten läuft, und zu verhindern, dass der erste Knoten an dem Netzwerk mit gemeinsamer P2P-Dateienverwendung teilnimmt, durch Blockieren von Datenzugang zu dem ersten Knoten.

10. System gemäß Anspruch 9, wobei die Prozessoreinheit konfiguriert ist, um:
- die Benutzereingabe zu verarbeiten, und
- die Anweisungen zu verwenden, um die Zieldatei in einer Vielzahl von Ordnern auf dem ersten Knoten zu platzieren.

11. System gemäß Anspruch 9, wobei die Identifikationsdaten eines oder mehrere sind aus:
a. verschlüsselt;
b. eine IP-Adresse des ersten Knotens umfassend;
c. einen Namen des ersten Knotens umfassend;
d. einen Namen eines Benutzers des ersten Knotens umfassend;
e. eine E-Mail-Adresse eines Benutzers des ersten Knotens umfassend; und
f. Informationen umfassend, die durch den Netzwerkadministrator oder
- operator eingegeben sind, der zum Überwachen des ersten Knotens verantwortlich ist.

12. System gemäß Anspruch 9, wobei das System unter Verwendung von Software implementiert wird, die konfiguriert ist, um zumindest teilweise auf dem ersten Knoten ausgeführt zu werden.

13. System gemäß Anspruch 9, wobei das System unter Verwendung von Software implementiert wird, die konfiguriert ist, um zumindest teilweise auf einem Computer ausgeführt zu werden, der von dem ersten Knoten verschieden ist.

14. System gemäß Anspruch 9, wobei die Prozessoreinheit konfiguriert ist, um zumindest eines aus einer Firewall, einem Infiltrationserfassungssystem, einem Router, oder einer Anwendung bei Erfassung von P2P-Software automatisch zu benachrichtigen.

## Revendications

1. Procédé destiné à détecter si un logiciel de partage de fichier poste à poste, P2P, est en fonction sur un premier noeud, comprenant les étapes consistant à :
a. créer un fichier cible qui contient des données d'identification, dans lequel les données d'identification identifient uniquement le premier noeud ;
b. placer le fichier cible dans un ou plusieurs dossiers sur le premier noeud avant qu'un administrateur sache si le premier noeud participe au partage de fichier P2P ;
c. émettre une recherche pour le fichier cible sur le réseau de partage de fichier P2P ; et
d. si le fichier cible est placé sur le réseau de partage de fichier P2P comme résultat de la recherche, déterminer que le logiciel de partage de fichier P2P fonctionne sur le premier noeud et empêcher le premier noeud de participer dans le réseau de partage de fichier P2P en bloquant l'accès des données au premier noeud.

2. Procédé selon la revendication 1, dans lequel le premier noeud réside sur un réseau informatique d'entreprise.

3. Procédé selon la revendication 1, dans lequel le premier noeud réside sur un réseau informatique domestique.

4. Procédé selon la revendication 1, dans lequel le fichier cible est placé dans une pluralité de dossiers sur le premier noeud.

5. Procédé selon la revendication 1, dans lequel les données d'identification sont l'un ou plusieurs parmi ce qui suit :
a. cryptées ;
b. contiennent une adresse IP du premier noeud ;
c. contiennent un nom du premier noeud ;
d. contiennent un nom d'un utilisateur du premier noeud ;
e. contiennent une adresse de courrier électronique d'un utilisateur du premier noeud ; et
f. contiennent des informations entrées par l'administrateur de réseau ou un opérateur chargé de contrôler le premier noeud.

6. Procédé selon la revendication 1, dans lequel le procédé est mis en oeuvre au moins en partie en utilisant un logiciel qui fonctionne sur le premier noeud.

7. Procédé selon la revendication 1, dans lequel le procédé est mis en oeuvre au moins en partie en utilisant un logiciel qui s'exécute sur un ordinateur différent du premier noeud.

8. Support lisible sur ordinateur comprenant des parties de code qui, lorsqu'elles sont exécutées sur un processeur, configurent le processeur pour exécuter toutes les étapes d'un procédé selon l'une quelconque des revendications de procédé précédentes.

9. Système destiné à détecter si un logiciel de partage de fichier poste à poste, P2P, fonctionne sur un premier noeud, comprenant :
un moyen de stockage configuré pour stocker des instructions ;
un dispositif d'entrée utilisateur configuré pour recevoir une entrée utilisateur ; et
une unité de processeur configurée pour traiter l'entrée utilisateur et pour utiliser les instructions pour :
- créer un fichier cible qui contient des données d'identification, dans lequel les données d'identification identifient uniquement le premier noeud ;
- placer le fichier cible dans un ou plusieurs dossiers sur le premier noeud avant qu'un administrateur sache si oui ou non le premier noeud participe dans le partage de fichier P2P ;
- émettre une recherche pour le fichier cible sur un réseau de partage de fichier P2P ; et
- si le fichier cible est placé en tant que résultat de la recherche, déterminer que le logiciel de partage de fichier P2P fonctionne sur le premier noeud et empêcher le premier noeud de participer dans le réseau de partage de fichier P2P en bloquant l'accès des données au premier noeud.

10. Système selon la revendication 9, dans lequel l'unité de processeur est configurée pour :
- traiter l'entrée utilisateur et
- utiliser les instructions pour placer le fichier cible dans une pluralité de dossiers sur le premier noeud.

11. Système selon la revendication 9, dans lequel les données d'identification sont l'un ou plusieurs parmi ce qui suit :
a. cryptées ;
b. contiennent une adresse IP du premier noeud ;
c. contiennent un nom du premier noeud ;
d. contiennent un nom d'un utilisateur du premier noeud ;
e. contiennent une adresse de courrier électronique d'un utilisateur du premier noeud ; et
f. contiennent des informations entrées par l'administrateur de réseau ou un opérateur chargé de contrôler le premier noeud.

12. Système selon la revendication 9, dans lequel le système est mis en oeuvre en utilisant un logiciel configuré pour s'exécuter au moins en partie sur le premier noeud.

13. Système selon la revendication 9, dans lequel le système est mis en oeuvre en utilisant un logiciel configuré pour s'exécuter au moins en partie sur un ordinateur différent du premier noeud.

14. Système selon la revendication 9, dans lequel l'unité de processeur est configurée pour notifier automatiquement au moins l'un parmi un pare-feu, un système de détection d'intrusion, un routeur, ou une application, sur détection du logiciel P2P.
